# FASCICULE DE BREVET EUROPEEN

(11) **EP 4 701 932 B1**
(45) Date de publication et mention de la délivrance du brevet: **13.05.2026**
(21) Numéro de dépôt: 24758785.0
(22) Date de dépôt: 20.08.2024
(51) Int. Cl.: B64G 1/50, F28D 15/00

(54) **DISPOSITIF DE CONTRÔLE THERMIQUE REDONDANT DE GRANDE LONGUEUR À STRUCTURES DIPHASIQUES COMPLEXES, PROCÉDÉ D'ASSEMBLAGE ET PROCÉDÉ DE FABRICATION**
REDUNDANTE HOCHLÄNGEN-WÄRMESTEUERUNGSVORRICHTUNG MIT KOMPLEXEN ZWEIPHASENSTRUKTUREN, MONTAGEVERFAHREN UND HERSTELLUNGSVERFAHREN
HIGH-LENGTH REDUNDANT THERMAL-CONTROL DEVICE WITH COMPLEX TWO-PHASE STRUCTURES, ASSEMBLY METHOD AND MANUFACTURING METHOD

(30) Priorité: 24.08.2023 FR 2308825
(43) Date de publication de la demande: 04.03.2026
(73) Titulaire: Airbus Defence and Space SAS, 31402 Toulouse Cedex 4 (FR)
(72) Inventeur: MARTINELLI, Matthieu, 31402 Toulouse cedex 4 (FR); FOURGEAUD, Laura, 1402 Toulouse cedex 4 (FR)
(74) Mandataire: Santarelli
(86) Numéro de dépôt international: PCT/EP2024/073334
(87) Numéro de publication internationale: WO 2025/040672

(56) Documents cités:
- EP-A1- 0 687 627
- EP-A2- 1 031 511
- US-A- 5 682 943
- US-B1- 10 837 712

## Description

### Domaine technique de l'invention

L'invention concerne le domaine des dispositifs de contrôle thermique permettant de réguler en température un équipement ou composant d'un engin spatial. L'invention concerne plus particulièrement une structure diphasique complexe et un procédé d'assemblage de structures diphasiques complexes pour l'obtention d'un dispositif de contrôle thermique redondant, ainsi qu'un procédé de fabrication d'un dispositif de contrôle thermique redondant comprenant la fabrication de structures diphasiques complexes par impression 3D. Le document US 10 837 712B divulgue un dispositif de contrôle thermique redondant comprenant une première structure diphasique comprenant deux étages distincts, désignés par premier et second étages, joints entre eux par une cloison étanche, chacun des étages délimitant une enceinte étanche comprenant au moins un milieu capillaire de circulation d'un fluide diphasique en phase liquide et un canal vapeur de circulation du fluide diphasique en phase vapeur, les enceintes étanches de chaque structure diphasique étant ouvertes à l'extrémité d'assemblage, les premier et second étages présentant chacun une extrémité de raccordement à l'extrémité d'assemblage, le premier étage de la structure diphasique présente, à son extrémité, un tronçon saillant qui s'étend en saillie du second étage.

### Etat de la technique

Une structure diphasique pour le transport de chaleur comprend un cœur vapeur et un capillaire. Le cœur vapeur et le capillaire sont destinés à transporter de l'énergie calorifique entre un élément à refroidir qualifié de source chaude situé à une première extrémité de la structure diphasique, dite extrémité chaude, formant un évaporateur, et une source froide (dissipateur thermique ou autre système de refroidissement) située à une extrémité opposée de la structure diphasique, dite extrémité froide, correspondant à un condenseur, et ce grâce au principe du transfert thermique par transition de phase d'un fluide et grâce au principe de la circulation par capillarité. A l'extrémité chaude de la structure diphasique, le fluide à l'état liquide se vaporise en absorbant de l'énergie thermique émise par l'élément à refroidir. La vapeur circule alors dans le cœur vapeur, jusqu'à l'extrémité froide de la structure diphasique où elle se condense pour retourner à l'état liquide. La condensation permet de céder de l'énergie thermique à la source froide. Le liquide retourne ensuite à l'extrémité chaude par capillarité grâce au capillaire. Une structure diphasique comprend par exemple un cœur vapeur formé par une cavité centrale qui s'étend selon une direction axiale ou longitudinale de la structure, et un capillaire disposé par exemple autour dudit cœur vapeur.

Dans toute la demande de brevet, le terme « *caloduc* » désignera des structures de type tubulaire simple et à contre-courant, la cavité centrale du tube correspondant au cœur vapeur du caloduc. Un caloduc est généralement obtenu par extrusion. L'expression « *structure diphasique »* sera par ailleurs utilisée pour désigner tout type de structure diphasique. On désignera enfin par « structure diphasique complexe », une structure diphasique ne pouvant pas être obtenue par extrusion. Une structure diphasique complexe est par exemple obtenue par fabrication additive.

Les structures diphasiques, et en particulier les caloducs, sont utilisées notamment pour le contrôle thermique des engins spatiaux. En l'absence d'atmosphère empêchant la ventilation, les caloducs transfèrent par exemple la chaleur des équipements situés à l'intérieur du satellite vers les parois extérieures du satellite ou vers des radiateurs, où la chaleur peut être évacuée par rayonnement.

On connaît aussi des caloducs extrudés présentant au moins une face extérieure plane s'étendant de préférence sur toute la longueur du caloduc afin de permettre de coupler structurellement et thermiquement ledit caloduc soit à un panneau radiateur soit à un autre caloduc ayant lui aussi une face extérieure plane de couplage. Un tel caloduc peut par exemple présenter une section carrée (dans laquelle est ménagée une cavité circulaire) avec quatre faces extérieures planes de couplage. Selon un autre exemple, le caloduc peut avoir la forme d'un conduit circulaire associé à un profilé de couplage plan (l'ensemble ayant une section en T) ou à deux profilés de couplage plans (section en H) ou encore à un profilé de couplage en angle. De tels caloducs sont divulgués dans EP 1 031 511.

La fabrication de caloducs par extrusion permet de générer des longueurs quelconques, sans limitation. En revanche, les possibilités en termes de configuration, comme par exemple la configuration du capillaire, sont restreintes. Ainsi par exemple, il n'est pas possible de fabriquer par extrusion un caloduc dont le capillaire ou le cœur vapeur présente des formes et/ou dimensions qui varient le long du caloduc, ou dont le capillaire est en forme de treillis par exemple. Ainsi, dans un caloduc obtenu par extrusion, le capillaire est formé par des rainures ménagées dans la face interne du tube (cœur vapeur), lesquelles rainures s'étendent nécessairement selon la direction axiale du caloduc.

A l'inverse, les techniques de fabrication additive permettent de concevoir des structures diphasiques ayant des configurations variées, en particulier des capillaires à structure 3D, le terme 3D renvoyant à la possibilité de fabriquer/structurer dans les 3 directions avec la fabrication additive alors que l'extrusion est monodirectionnelle. Ces techniques permettent de plus de concevoir plus aisément des structures diphasiques redondantes nécessaires dans le domaine spatial où on doit doubler chaque système de transfert thermique.

Cependant l'inconvénient majeur de la fabrication additive est que les imprimantes 3D ont nécessairement une taille limitée, ce qui limite la longueur des structures diphasiques obtenues. Dans l'état de la technique, la taille maximum des structures diphasiques 3D qui peuvent être obtenues par impression 3D est généralement inférieure à 500mm. De plus, d'une manière générale, la précision d'une imprimante 3D décroit lorsque sa taille augmente.

Il apparaît ainsi le besoin, de fournir un dispositif d'échange thermique permettant des configurations complexes, notamment dans un environnement spatial, pouvant s'étendre sur de grandes longueurs (supérieures ou très supérieures à 500mm).

L'invention vise à fournir un dispositif de contrôle thermique adapté aux grandes longueurs et aux structures diphasiques complexes notamment pour le milieu spatial nécessitant une redondance.

L'invention vise aussi à fournir un procédé d'assemblage de structures diphasiques pour l'obtention d'un dispositif de contrôle thermique de grande longueur, qui permette d'utiliser des structures diphasiques obtenues par fabrication additive et qui conduise à l'obtention d'un dispositif de contrôle thermique fiable, redondant et parfaitement étanche à la jonction entre les structures diphasiques.

### Exposé de l'invention

Dans toute la demande de brevet, par convention et par souci de simplicité, les structures diphasiques sont décrites dans un référentiel terrestre usuel où la direction verticale correspond à la direction de la gravité, et dans une position et une orientation dans laquelle la direction longitudinale de la structure diphasique est horizontale. Ceci ne présume en rien de l'orientation que la structure diphasique a lorsqu'elle est intégrée dans un satellite au sol ni de celle qu'elle aura une fois le satellite dans l'espace. Ainsi, les expressions « au-dessus *de* », « *en dessous de* », « *supérieur* », « *inférieur* » ... font référence à la direction de la gravité mais deux éléments décrits comme étant l'un au-dessus de l'autre peuvent par exemple se retrouver inversement l'un en dessous de l'autre ou encore l'un à côté de l'autre une fois la structure diphasique intégrée dans le satellite.

Pour atteindre les objectifs susmentionnés, l'invention propose un dispositif de contrôle thermique redondant comprenant une première structure diphasique et seconde structure diphasique, caractérisé en ce que :
- chacune des structures diphasiques comprend deux étages distincts, désignés par premier et second étages, joints entre eux par une cloison étanche, chacun des étages délimitant une enceinte étanche comprenant au moins un milieu capillaire de circulation d'un fluide diphasique en phase liquide et un canal vapeur de circulation du fluide diphasique en phase vapeur, chacune des structures diphasiques comprenant au moins une extrémité d'assemblage pour l'assemblage de ladite structure diphasique avec l'autre structure diphasique, les enceintes étanches de chaque structure diphasique étant ouvertes à l'extrémité d'assemblage, les premier et second étages présentant chacun une extrémité de raccordement à l'extrémité d'assemblage,
- le premier étage de chacune des structures diphasiques présente, à son extrémité d'assemblage, un tronçon saillant qui s'étend en saillie du second étage, l'extrémité de raccordement du premier étage de la première structure diphasique venant contre ou à proximité immédiate de l'extrémité de raccordement du premier étage de la seconde structure diphasique de sorte que leur milieu capillaire se rejoignent pour former un premier chemin liquide continu et leurs canaux vapeur se rejoignent pour former un premier chemin vapeur continu, tandis que leurs enceintes étanches sont soudées entre elles de façon étanche sur toute leur périphérie, un espace subsistant alors entre les extrémités de raccordement des seconds étages des structures diphasiques,
- le dispositif comprend de plus un pont, configuré pour venir se loger dans l'espace entre les extrémités de raccordement des seconds étages des structures diphasiques, ledit pont présentant une enceinte étanche comprenant un milieu capillaire de circulation du fluide diphasique en phase liquide, un canal vapeur de circulation du fluide diphasique en phase vapeur et deux extrémités de raccordement ouvertes qui viennent contre ou à proximité immédiate des extrémités de raccordement des seconds étages des première et seconde structures diphasiques de sorte que le milieu capillaire du pont et le milieu capillaire du second étage de chacune des structures diphasiques se rejoignent et que le canal vapeur du pont et le canal vapeur du second étage de chacune des structures diphasiques se rejoignent, le milieu capillaire du pont et le canal vapeur du pont réalisant une jonction entre, respectivement, les milieux capillaires et les canaux vapeur des seconds étages pour former, respectivement, un second chemin liquide continu et un second chemin vapeur continu, tandis que les enceintes étanches du pont et des structures diphasiques sont soudées entre elles de façon étanche sur tout un contour fermé.

Selon des modes de réalisation particuliers de l'invention, le dispositif répond en outre aux caractéristiques suivantes, mises en œuvre individuellement ou selon toute combinaison techniquement possible et opérante.

Dans certains modes de réalisation, les enceintes du pont et des structures diphasiques sont soudées de façon à former au moins une première ligne externe de soudure disposée sur des faces extérieures des premiers étages des structures diphasiques, des deuxièmes lignes externes de soudure disposées sur des faces extérieures des seconds étages et du pont, et des troisièmes lignes externes de soudure disposées sur des faces extérieures des premiers étages et du pont, les première, deuxièmes et troisièmes lignes externes de soudure jointes entre elles formant ainsi un cordon de soudure fermé et étanche.

Dans certains modes de réalisation, les extrémités de raccordement des premiers étages en vis-à-vis forment au moins une gorge périphérique de logement des premières lignes externes de soudure.

Dans certains modes de réalisation, le pont présente des encoches de logement d'une ligne interne de soudure disposée sur des faces supérieures intérieures des premiers étages des première et seconde structures diphasiques, ces encoches venant en vis-à-vis de la jonction des extrémités de raccordement desdits premiers étages.

Dans certains modes de réalisation, les première et seconde structures diphasiques sont de type structure complexe générée par fabrication additive.

L'invention est également relative à un procédé d'assemblage d'une première structure diphasique et d'une seconde structure diphasique, caractérisé en ce que chacune des structures diphasiques comprend deux étages distincts, désignés par premier et second étages, joints entre eux par une cloison étanche, chacun desdits étages délimitant une enceinte étanche comprenant au moins un milieu capillaire de circulation d'un fluide diphasique en phase liquide et un canal vapeur de circulation du fluide diphasique en phase vapeur, chacune des structures diphasiques comprenant au moins une extrémité d'assemblage pour l'assemblage de ladite structure diphasique avec l'autre structure diphasique, les enceintes étanches de chaque structure diphasique étant ouvertes à l'extrémité d'assemblage, les premier et second étages présentant chacun une extrémité de raccordement à l'extrémité d'assemblage, le premier étage de chacune des structures diphasiques présentant, à son extrémité d'assemblage, un tronçon saillant qui s'étend en saillie du second étage. Le procédé d'assemblage est de plus caractérisé en ce qu'il comprend les étapes suivantes :
- on positionne l'extrémité de raccordement du premier étage de la première structure diphasique contre ou à proximité immédiate de l'extrémité de raccordement du premier étage de la seconde structure diphasique de sorte que leur milieu capillaire se rejoignent et que leur canaux vapeur se rejoignent, un espace subsistant alors entre les extrémités de raccordement (60, 61) des seconds étages des structures diphasiques,
- on soude entre eux, de façon étanche et sur toute leur périphérie, les premiers étages des structures diphasiques,
- on se munit d'un pont, présentant une enceinte étanche comprenant un milieu capillaire de circulation du fluide diphasique en phase liquide, un canal vapeur de circulation du fluide diphasique en phase vapeur et deux extrémités de raccordement ouvertes, le pont étant configuré pour venir se loger dans l'espace entre les extrémités de raccordement des seconds étages des structures diphasiques et pour que ses extrémités de raccordement se retrouvent alors en contact avec les extrémités de raccordement des seconds étages,
- on insère ledit pont entre les extrémités de raccordement des seconds étages des première et seconde structures diphasiques, les extrémités de raccordement du pont étant alors en contact avec les extrémités de raccordement desdits seconds étages de sorte que le milieu capillaire du pont et le milieu capillaire du second étage de chacune des structures diphasiques se rejoignent et que le canal vapeur du pont et le canal vapeur du second étage de chacune des structures diphasiques se rejoignent, le milieu capillaire du pont et le canal vapeur du pont réalisant une jonction entre, respectivement, les milieux capillaires et les canaux vapeur des seconds étages des structures diphasiques pour former, respectivement, un second chemin liquide continu et un second chemin vapeur continu,
- on soude de façon étanche les enceintes du pont et des structures diphasiques, selon un contour fermé.

Selon des modes de mise en œuvre particuliers de l'invention, le procédé d'assemblage répond en outre aux caractéristiques suivantes, mises en œuvre individuellement ou selon toute combinaison techniquement possible et opérante..

Dans certains modes de mise en œuvre, l'extrémité de raccordement de premier étage de la première structure diphasique présente un épaulement périphérique formant une fiche mâle, tandis que l'extrémité de raccordement du premier étage de la seconde structure diphasique présente un évidement et un épaulement périphérique formant une fiche femelle configurée pour recevoir par emboîtement la fiche mâle du premier étage de la première structure diphasique.

Dans certains modes de mise en œuvre, l'évidement de la fiche femelle présente une dimension longitudinale inférieure à ladite fiche mâle, de sorte qu'une gorge périphérique apparait lorsque lesdites fiches mâle et femelle sont emboîtées, laquelle gorge périphérique permet de loger des premières lignes externes de soudure disposées sur des faces extérieures des premiers étages des première et seconde structures diphasiques ainsi qu'une première ligne interne de soudure disposée sur des faces supérieures intérieures desdits premiers étages.

Dans certains modes de mise en œuvre, les première et seconde structures diphasiques sont obtenues par fabrication additive.

L'invention est également relative à un procédé de fabrication d'un dispositif de contrôle thermique redondant ayant une longueur supérieure ou égale à 400mm, destiné à s'étendre entre une source chaude et une source froide et comprenant au moins deux étages redondants contenant chacun un fluide diphasique, caractérisé en ce qu'il comprend :
- la production par fabrication additive d'au moins une première structure diphasique, une seconde structure diphasique et un pont, où chacune desdites première et seconde structures diphasiques comprend un premier étage et un second étage joints entre eux par une cloison étanche, chacun desdits étages délimitant une enceinte étanche comprenant au moins un milieu capillaire de circulation du fluide diphasique en phase liquide et un canal vapeur de circulation du fluide diphasique en phase vapeur, chacune des structures diphasiques comprenant au moins une extrémité d'assemblage pour l'assemblage de ladite structure diphasique avec l'autre structure diphasique, les enceintes étanches de chaque structure diphasique étant ouvertes à l'extrémité d'assemblage, les premier et second étages présentant chacun une extrémité de raccordement à l'extrémité d'assemblage, le premier étage de chacune des structures diphasiques présentant, à son extrémité d'assemblage, un tronçon saillant qui s'étend en saillie du second étage de sorte que, lorsque l'extrémité de raccordement du premier étage de la première structure diphasique est placée contre ou à proximité immédiate de l'extrémité de raccordement du premier étage de la seconde structure diphasique et que leurs milieux capillaires se rejoignent pour former un premier chemin liquide et leurs canaux vapeur se rejoignent pour former un premier chemin vapeur, un espace subsiste entre les extrémités de raccordement des seconds étages des structures diphasiques,
   et où le pont présente une enceinte étanche comprenant un milieu capillaire de circulation du fluide diphasique en phase liquide, un canal vapeur de circulation du fluide diphasique en phase vapeur et deux extrémités de raccordement ouvertes, le pont étant configuré pour venir se loger dans l'espace entre les extrémités de raccordement des seconds étages des structures diphasiques et pour que ses extrémités de raccordement se retrouvent alors en contact avec les extrémités de raccordement des seconds étages, le milieu capillaire du pont et le canal vapeur du pont réalisant une jonction entre, respectivement, les milieux capillaires et les canaux vapeur des seconds étages pour former, respectivement, un second chemin liquide continu et un second chemin vapeur continu, puis
- un assemblage, conformément au procédé d'assemblage tel que décrit précédemment (selon l'un quelconque de ses modes de mise en œuvre précités), desdites structures diphasiques (avec le pont) pour former le dispositif de contrôle thermique.

### Brève description des dessins

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] la figure 1 est une vue schématique en perspective représentant partiellement deux structures diphasiques et un pont selon un exemple de réalisation de l'invention, la figure 1 montrant plus particulièrement les extrémités d'assemblage desdites structures. Sur cette figure, les deux structures diphasiques et le pont sont représentés en cours d'assemblage, afin d'illustrer le principe général du procédé d'assemblage selon l'invention.
[Fig. 2] la figure 2 est une vue schématique en perspective reproduisant les éléments de la figure 1 à l'issue de l'assemblage.
[Fig. 3] la figure 3 est une vue en perspective montrant un autre exemple de réalisation de deux structures diphasiques et d'un pont selon l'invention, en cours d'assemblage.
[Fig. 4] la figure 4 est une vue des éléments de la figure 3 une fois l'assemblage de ces éléments terminé, en coupe selon un plan longitudinal vertical médian.

### Description détaillée

Les éléments identiques représentés sur les figures précitées sont identifiés par des références numériques identiques.

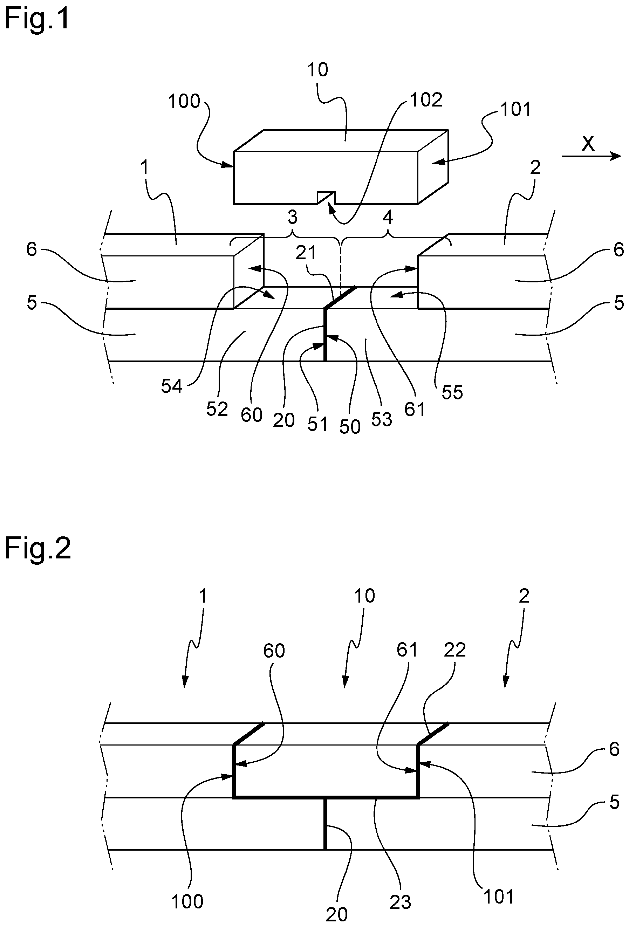

L'invention concerne un assemblage de structures diphasiques, leur procédé d'assemblage ainsi qu'un procédé de fabrication d'un dispositif de contrôle thermique redondant ayant une longueur supérieure ou égale à 400mm. La figure 1 montre une portion de deux structures diphasiques 1, 2 en cours d'assemblage. Chacune des structures diphasiques 1, 2 comprend une extrémité d'assemblage 3, 4 pour son assemblage avec l'autre structure diphasique 2, 1 respectivement. Bien entendu, la structure diphasique 1 (ou la structure diphasique 2) peut comprendre, à son extrémité opposée (non visible sur les figures), une seconde extrémité d'assemblage similaire à l'extrémité d'assemblage 3 (ou 4) permettant d'assembler l'autre bout de la structure diphasique à une autre, troisième, structure diphasique elle-même pourvue d'une extrémité d'assemblage selon l'invention. On peut ainsi réaliser des assemblages en série de plusieurs structures diphasiques et notamment de structures diphasiques complexes et redondantes.

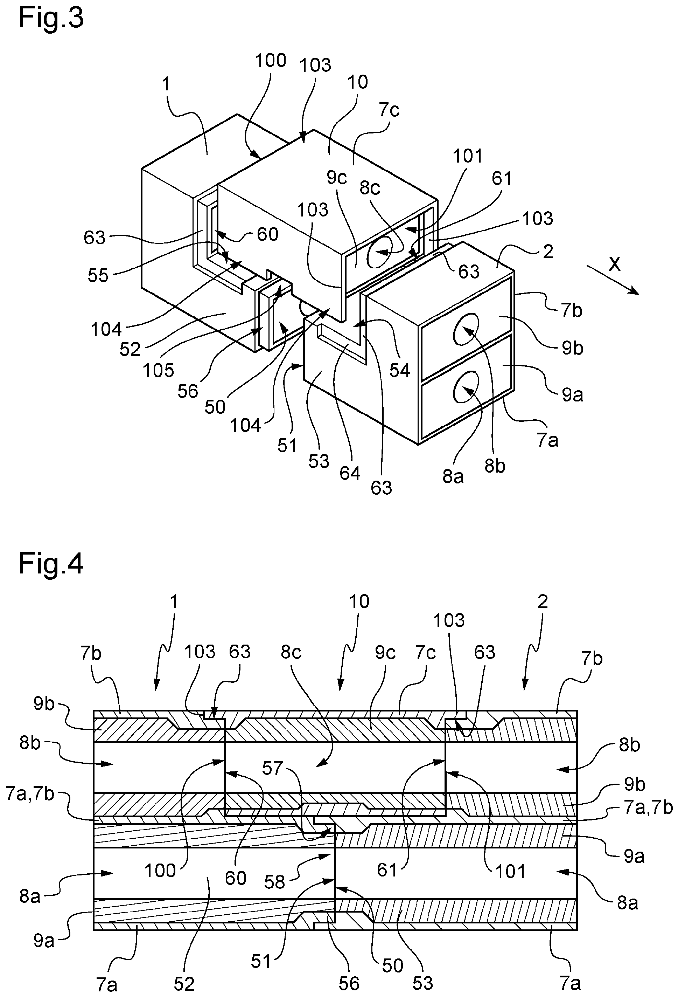

Des éléments composant les structures diphasiques selon l'invention sont maintenant décrits, en référence aux figures 1 et 2, mais aussi en référence aux figures 3 et 4 notamment dans le cas où ces éléments sont communs aux deux exemples de réalisation.

Comme représenté sur les figures 1 à 4, chaque structure diphasique 1, 2 présente un premier étage 5 et un second étage 6 délimités chacun par une enceinte étanche, référencée 7a pour le premier étage et 7b pour le second étage. Les premier et second étages sont ainsi distincts. Les étages sont par ailleurs joints entre eux mécaniquement par une cloison étanche. Comme représenté en détail à la figure 4 une telle cloison étanche peut être commune aux enceintes étanches des premier et second étages.

Chaque enceinte étanche 7a, 7b intègre un canal 8a, 8b pour la circulation d'un fluide en phase vapeur, désigné par canal vapeur, et un milieu capillaire 9a, 9b pour la circulation dudit fluide en phase liquide. Dans la structure diphasique pour le transport de chaleur le canal vapeur forme en partie le chemin vapeur et le milieu capillaire forme en partie le chemin de liquide.

Les étages sont séparés l'un de l'autre de façon étanche afin que le fluide circulant dans le premier étage ne se mêle pas au fluide circulant dans le second étage et vice versa. En revanche, ces étages sont en communication thermique : de la chaleur peut être échangée entre les deux étages par conduction dans la matière. Un des avantages de l'invention est d'ailleurs de proposer une structure diphasique redondante facile à fabriquer, ayant deux circuits de fluide parallèles parfaitement jointifs tout le long de la structure diphasique afin d'offrir une capacité d'échange thermique maximale entre les deux étages. Avantageusement, l'enceinte étanche 7a du premier étage 5 et l'enceinte étanche 7b du second étage 6 peuvent par exemple partager une paroi commune à la limite entre le premier et le second étage, comme c'est le cas sur les exemples illustrés.

Le canal vapeur 8a, 8b de chacun des étages s'étend par exemple selon une direction longitudinale X. Dans les exemples illustrés, la direction longitudinale X est rectiligne mais elle pourrait être courbe. On pourrait également réaliser une jonction avec un angle par exemple à 90 degrés. Les canaux vapeur 8a, 8b peuvent être identiques comme c'est le cas dans les exemples illustrés. Les canaux vapeur peuvent, en variante, présenter des diamètres différents et/ou des sections de formes différentes.

Le milieu capillaire 9a, 9b peut être composé de mailles ou de poudres métalliques frittées ou de mousses métalliques ; en variante le milieu capillaire est formé par une épaisseur d'un matériau solide plein, qui peut être le même matériau que celui constituant l'enceinte étanche 7a ou 7b, structuré par des rainures ou autres motifs ouverts sur le canal vapeur. Ces motifs ne sont pas représentés sur les figures annexées, les milieux capillaires étant simplement schématisés par une couche de matériau délimitant les canaux 8a, 8b.

Les milieux capillaires 9a, 9b peuvent être identiques ; ils peuvent en variante présenter des épaisseurs différentes et/ou des motifs différents et/ou être constitués dans des matériaux différents, etc.

Les structures diphasiques selon l'invention peuvent être obtenues par impression 3D, également désignée par fabrication additive. Cette technique permet de produire les deux étages de la structure dans le cadre d'une même fabrication, ce qui supprime l'étape d'assemblage des étages qui peut exister dans certains procédés de fabrication antérieurs. L'impression 3D permet ainsi d'obtenir une structure dans laquelle les échanges thermiques pouvant avoir lieu à l'utilisation entre les étages sont maximisés.

L'impression 3D permet de plus de concevoir aisément des structures diphasiques dont la direction longitudinale est courbe ou omnidirectionnel ou en angle. L'impression 3D permet également de concevoir aisément des structures diphasiques dont les milieux capillaires présentent des motifs en trois dimensions (par opposition aux rainures obtenues par extrusion qui suivent une seule et même direction et présentent une section identique le long de cette direction). Ainsi par exemple, la structure diphasique selon l'invention peut comprendre, comme milieu capillaire, des mailles directement formées sur une couche interne de l'enceinte étanche, ou encore une ou plusieurs rainures hélicoïdales (éventuellement non parallèles) ; le milieu capillaire peut aussi comprendre des motifs qui évoluent le long de la structure diphasique, par exemple des motifs plus ou moins profonds ou larges selon leur emplacement respectif par rapport à la source chaude ou à la source froide.

A l'extrémité d'assemblage 3, 4 de chaque structure diphasique 1, 2 :
- les extrémités des enceintes étanches 7a, 7b des premier et second étages sont ouvertes,
- le premier étage 5 présente une extrémité de raccordement 50 ou 51 transversale qui, dans l'exemple simplifié des figures 1 et 2, est plane et orthogonale à la direction longitudinale X ;
- de même, le second étage 6 présente une extrémité de raccordement 60 ou 61 transversale qui, dans l'exemple simplifié des figures 1 et 2, est plane et orthogonale à la direction longitudinale X ;
- le premier étage 5 de chacune des structures diphasiques présente de plus un tronçon saillant 52, 53 qui s'étend en saillie par exemple longitudinalement, du second étage 6, c'est-à-dire au-delà de l'extrémité de raccordement 60, 61 du second étage. Les extrémités de raccordement 50 et 60, respectivement 51 et 61, sont ainsi décalées, ici selon la direction longitudinale X. En variante, le tronçon saillant pourrait former un angle avec la direction longitudinale X de telle sorte que l'extrémité du premier étage serait décalée latéralement (voire à la fois latéralement et longitudinalement) de l'extrémité du second étage. Par exemple, l'extrémité du premier étage pourrait s'inscrire dans un plan orthogonal à une direction Y orthogonale à la direction longitudinale X ou formant un angle quelconque non nul avec cette direction X, tandis que l'extrémité du second étage s'inscrirait dans un plan orthogonal à la direction X comme dans les exemples illustrés.

Les extrémités de raccordement 50, 51, 60, 61 peuvent aussi, par exemple, ne pas être planes (voir notamment l'exemple des figures 3 et 4) et/ou ne pas être orthogonales à la direction longitudinale (elles pourraient par exemple être inclinées) ; dans ce cas, les extrémités des milieux capillaires 9a du premier étage des deux structures diphasiques sont de préférence complémentaires afin de pouvoir se rejoindre (voir fig. 1) sur toute leur section.

Les étapes du procédé d'assemblage selon un exemple de réalisation vont maintenant être décrites en référence notamment aux figures 1 et 2.

Les structures diphasiques 1, 2 sont par exemple agencées de façon à être alignées selon la direction longitudinale X et de façon à ce que les extrémités de raccordement 50 et 51 des premiers étages soient accolées comme illustré à la figure 1, les milieux capillaires 9a des premiers étages venant en contact l'un de l'autre ou à une distance permettant d'assurer la continuité fluidique, tandis que leurs enceintes étanches 7a viennent en contact ou à une distance permettant leur jonction par soudure. Les canaux vapeur 8a des premiers étages sont également en communication.

Les extrémités de raccordement 60, 61 des seconds étages se retrouvent alors par exemple en regard et à distance longitudinalement l'une de l'autre comme on peut l'observer sur la figure 1.

Les premiers étages 5 des deux structures diphasiques 1, 2 sont ensuite soudés entre eux, par un cordon de soudure périphérique fermé, à la jonction entre les extrémités de raccordement 50 et 51. Ce cordon de soudure périphérique comprend notamment une portion 20 (fig. 1 et 2) transversale continue, dite première ligne externe de soudure, sur les faces extérieures latérales et inférieure des enceintes 7a, et une portion 21 (voir fig. 1), dite première ligne interne de soudure, sur les faces intérieures supérieures 54, 55 des tronçons saillants 52, 53, la première ligne interne de soudure 21 faisant la jonction entre les deux extrémités de la première ligne externe de soudure 20. Les enceintes étanches 7a des premiers étages sont ainsi soudées entre elles de façon étanche.

Un pont 10 est ensuite inséré dans l'espace existant entre les extrémités de raccordement 60 et 61 des seconds étages. Le pont 10 comprend une enceinte étanche 7c qui intègre un canal vapeur 8c pour la circulation du fluide en phase vapeur et un milieu capillaire 9c pour la circulation (par capillarité) dudit fluide en phase liquide. Le pont est configuré (en particulier en termes de dimensions) pour pouvoir être inséré dans l'espace susmentionné avec son canal vapeur 8c venant dans le prolongement (ici selon la direction longitudinale X) des canaux vapeur 8b des seconds étages des structures diphasiques 1 et 2 et son milieu capillaire 9c venant dans le prolongement (ici selon la direction longitudinale X) des structures capillaires 9b des seconds étages des structures diphasiques 1 et 2.

Le pont présente deux extrémités de raccordement 100, 101 configurées pour coopérer avec les extrémités de raccordement 60, 61 des seconds étages des structures diphasiques pour assurer la continuité fluidique entre le second étage 6 de la première structure diphasique 1 et le pont 10, et entre le pont 10 et le second étage 6 de la seconde structure diphasique 2. En particulier, le milieu capillaire 9c du pont est configuré pour se retrouver en contact avec l'extrémité des milieux capillaires 9b des seconds étages des structures diphasiques ou à une distance permettant d'assurer la continuité fluidique, de préférence sur toute la section desdits milieux capillaires. Le canal vapeur 8c du pont vient aussi dans le prolongement et en contact (ou à une distance suffisamment faible pour assurer une canalisation de la vapeur) des canaux vapeur 8b des seconds étages. L'enceinte du pont vient en contact avec les enceintes des seconds étages et en contact avec les enceintes des premiers étages (ou à une distance suffisamment faible) pour permettre leur jonction par soudure. Le pont peut présenter, dans sa face intérieure inférieure, une échancrure transversale 102 qui s'étend sur toute la largeur dudit pont et dans laquelle vient se loger la première ligne interne de soudure 21 réalisée auparavant entre les enceintes des premiers étages.

Le pont est alors soudé (voir fig. 2) aux deux structures diphasiques 1, 2 par un deuxième cordon de soudure externe fermé qui suit le pourtour de la jonction entre le pont et les structures diphasiques. Ce cordon de soudure comprend par exemple deux deuxièmes lignes externes de soudure 22 transversales continues, disposées à la jonction entre l'extrémité de raccordement 100 du pont et l'extrémité de raccordement 60 du second étage de la première structure diphasique d'une part et à la jonction entre l'extrémité de raccordement 101 du pont et l'extrémité de raccordement 61 du second étage de la seconde structure diphasique d'autre part. Les lignes transversales 22 s'arrêtent par exemple à la jonction entre les premier et second étages 5, 6 pour se prolonger par deux troisièmes lignes externes de soudure 23 longitudinales (une seule est visible sur les figures) à la jonction entre le pont et le premier étage des structures diphasiques, c'est-à-dire plus précisément à la jonction entre le bord inférieur des faces latérales du pont et les faces latérales des tronçons saillants 52, 53 des structures diphasiques. Ces lignes longitudinales et transversales forment ainsi un contour fermé et étanche entre le pont et les deux structures diphasiques.

Les figures 3 et 4 montrent en particulier l'aménagement de gorges recevant les cordons de soudure. La plupart des éléments de ces structures se retrouvent dans le premier exemple de réalisation et ont été décrits en référence aux figures 1 et 2. L'accent est donc mis ci-après sur les différences entre les deux exemples de réalisation.

Là encore, on comprendra aisément que seule une portion de la longueur des structures diphasiques est représentée. De plus, afin de pouvoir observer les canaux vapeur 8a, 8b et les milieux capillaires 9a, 9b sur la fig. 3, les structures diphasiques 1, 2 sont coupées à l'opposé de leur extrémité d'assemblage.

Outre les caractéristiques décrites précédemment, le tronçon saillant 52 de la première structure diphasique 1 des fig. 3 et 4 présente par exemple un épaulement périphérique qui forme une fiche mâle 56. De façon complémentaire, le tronçon saillant 53 de la seconde structure diphasique 2 présente un évidement et un épaulement périphérique 57 dans son extrémité de raccordement 51, qui forment une fiche femelle 58 configurée pour recevoir la fiche mâle 56 de la première structure diphasique. Dans la première étape du procédé d'assemblage visant à plaquer l'une contre l'autre les extrémités de raccordement 50 et 51 du premier étage des structures diphasiques, on emboîte la fiche mâle 56 dans la fiche femelle 58. La fiche mâle reste par exemple partiellement à l'extérieur de la fiche femelle de façon à former une gorge correspondant à l'emplacement du cordon de soudure entre les premiers étages.

Par ailleurs, l'extrémité de raccordement 60, 61 du second étage de chacune des structures diphasiques présente par exemple un renfoncement transversal 63 et un renfoncement longitudinal 64, par exemple sur les bords des deux faces extérieures latérales et de la face extérieure supérieure de l'enceinte 7b, ainsi que sur les bords supérieurs des faces extérieures latérales des tronçons saillants 52, 53, correspondant à l'emplacement du cordon de soudure avec le pont.

De façon complémentaire, à chacune des extrémités de raccordement 100, 101 du pont, les deux faces latérales et la face supérieure du pont sont par exemple prolongées par un rebord 103, configuré pour recouvrir au moins partiellement les renfoncements 63 et 64 lorsque le pont est mis en place.

Dans l'exemple illustré, le renfoncement longitudinal 64 de chaque structure diphasique débute au niveau de l'extrémité de raccordement 60, 61 du second étage en direction de l'extrémité de raccordement 50, 51 du premier étage mais ne s'étend pas jusqu'à cette dernière pour ne pas gêner la réalisation d'une soudure fermée et étanche.

Par ailleurs, dans cet exemple, le pont présente des rebords latéraux inférieurs 104 qui prolongent ses faces extérieures latérales, et une encoche 105 est prévue dans chacun desdits rebords inférieurs 104 du pont, lesquelles encoches 105 enjambent le cordon de soudure qui relie les premiers étages. Si nécessaire, une échancrure, similaire à l'échancrure 102 du premier exemple de réalisation décrit aux figures 1 et 2, peut également être prévue dans la face inférieure du pont dans l'alignement des deux encoches 105 pour loger une ligne de soudure similaire à la première ligne interne de soudure 21 reliant les faces intérieures supérieures 54, 55 des tronçons saillants 52, 53 ; en variante, comme illustré, la face inférieure du pont est suffisamment en retrait verticalement de l'extrémité inférieure des rebords 104 du pont pour pouvoir loger cette première ligne interne de soudure 21.

Les rebords transversaux 103 peuvent par exemple présenter une dimension selon la direction longitudinale X inférieure à la dimension selon la direction longitudinale X des renfoncements 63, de sorte que des gorges apparaissent aux jonctions entre le pont et le second étage des structures diphasiques afin de permettre de loger les lignes de soudure transversales par exemple similaires aux deuxièmes lignes externes de soudure 22 des figures 1 et 2.

De même, les rebords inférieurs 104 du pont peuvent par exemple présenter une dimension selon la direction verticale inférieure à la dimension selon la direction verticale des renfoncements 64, de sorte que des gorges apparaissent aux jonctions entre le pont et le premier étage des structures diphasiques afin de permettre de loger les lignes de soudure longitudinales par exemple similaires aux lignes 23 des figures 1 et 2.

Avantageusement la présente invention permet de réaliser une structure diphasique redondante complexe, présentant par exemple un milieu capillaire en treillis, sur des longueurs importantes. L'invention permet en effet de raccorder des pièces à double cavités tout en garantissant la continuité et l'étanchéité des cavités.

Un avantage est également que la structure redondante reste compacte et donc plus simple à mettre en place sur un satellite qui nécessite de manière générale des aménagements très compacts. La redondance est souvent exigée pour les fonctions mises en œuvre à bord d'un satellite et il devient avantageusement possible de réaliser de telles fonctions par des structures diphasiques complexes. L'impression 3D permet en effet des constructions apportant, du fait de leur degré de complexité, des fonctions avancées pour le contrôle thermique à bord des satellites.

Un autre avantage est qu'on peut réaliser un dispositif de contrôle thermique redondant en joignant entre elles des structures diphasiques à deux étages. On a ainsi d'une part une meilleure tenue mécanique par rapport à des assemblages de structures diphasiques à un étage. Les deux étages monoblocs apportent en effet une plus grande raideur. D'autre part le montage de structures diphasiques à deux étages permet de disposer d'une interface de fixation mécanique permettant fixer en même temps les deux étages (principal et redondant) dans le satellite.

## Revendications

1. Dispositif (1, 2, 10) de contrôle thermique redondant comprenant une première structure diphasique (1) et seconde structure diphasique ( 2), **caractérisé en ce que** :
- chacune des structures diphasiques comprend deux étages distincts, désignés par premier (5) et second (6) étages, joints entre eux par une cloison étanche, chacun des étages délimitant une enceinte étanche (7a, 7b) comprenant au moins un milieu capillaire (9a, 9b) de circulation d'un fluide diphasique en phase liquide et un canal vapeur (8a, 8b) de circulation du fluide diphasique en phase vapeur, chacune des structures diphasiques comprenant au moins une extrémité d'assemblage (3, 4) pour l'assemblage de ladite structure diphasique avec l'autre structure diphasique, les enceintes étanches (7a, 7b) de chaque structure diphasique étant ouvertes à l'extrémité d'assemblage, les premier et second étages présentant chacun une extrémité de raccordement (50, 60 ; 51, 61) à l'extrémité d'assemblage,
- le premier étage de chacune des structures diphasiques présente, à son extrémité d'assemblage, un tronçon saillant (52, 53) qui s'étend en saillie du second étage, l'extrémité de raccordement (50) du premier étage de la première structure diphasique venant contre ou à proximité immédiate de l'extrémité de raccordement (51) du premier étage de la seconde structure diphasique de sorte que d'une part leur milieu capillaire se rejoignent pour former un premier chemin liquide continu et d'autre part que leurs canaux vapeur (8a) se rejoignent pour former un premier chemin vapeur continu, tandis que leurs enceintes étanches (7a) sont soudées entre elles de façon étanche sur toute leur périphérie, un espace subsistant alors entre les extrémités de raccordement (60, 61) des seconds étages des structures diphasiques,
- le dispositif comprend de plus un pont (10), configuré pour venir se loger dans l'espace entre les extrémités de raccordement (60, 61) des seconds étages des structures diphasiques, ledit pont présentant une enceinte étanche (7c) comprenant un milieu capillaire (9c) de circulation du fluide diphasique en phase liquide, un canal vapeur (8c) de circulation du fluide diphasique en phase vapeur et deux extrémités de raccordement (100, 101) ouvertes qui viennent contre ou à proximité immédiate des extrémités de raccordement (60, 61) des seconds étages des première et seconde structures diphasiques de sorte que le milieu capillaire du pont (9c) et le milieu capillaire du second étage (9b) de chacune des structures diphasiques (1, 2) se rejoignent et que le canal vapeur du pont (8c) et le canal vapeur du second étage (8b) de chacune des structures diphasiques (1, 2) se rejoignent, le milieu capillaire du pont (9c) et le canal vapeur du pont (8c) réalisant une jonction entre, respectivement, les milieux capillaires (9b) et les canaux vapeur (8b) des seconds étages pour former, respectivement, un second chemin liquide continu et un second chemin vapeur continu, tandis que les enceintes étanches (7c, 7b, 7a) du pont et des structures diphasiques sont soudées entre elles de façon étanche sur tout un contour fermé.

2. Dispositif selon la revendication 1, dans lequel les enceintes (7a, 7c, 7b) du pont (10) et des structures diphasiques (1, 2) sont soudées de façon à former au moins une première ligne externe de soudure (20) disposée sur des faces extérieures des premiers étages des structures diphasiques, des deuxièmes lignes externes de soudure (22) disposées sur des faces extérieures des seconds étages et du pont, et des troisièmes lignes externes de soudure (23) disposées sur des faces extérieures des premiers étages et du pont, les première, deuxièmes et troisièmes lignes externes de soudure jointes entre elles formant ainsi un cordon de soudure fermé et étanche.

3. Dispositif selon la revendication précédente, dans lequel les extrémités de raccordement (50, 51) des premiers étages en vis-à-vis forment au moins une gorge périphérique de logement des premières lignes externes (20) de soudure.

4. Dispositif selon l'une des revendications précédentes, dans lequel le pont présente des encoches (105) de logement d'une première ligne interne de soudure (21) disposée sur des faces supérieures intérieures (54, 55) des premiers étages des première et seconde structures diphasiques, ces encoches venant en vis-à-vis de la jonction des extrémités de raccordement (50, 51) desdits premiers étages.

5. Dispositif selon l'une des revendications précédentes, dans lequel les première et seconde structures diphasiques (1, 2) sont de type structure complexe générée par fabrication additive.

6. Procédé d'assemblage d'une première structure diphasique (1) et d'une seconde structure diphasique (2), **caractérisé en ce que** chacune des structures diphasiques comprend deux étages distincts, désignés par premier (5) et second (6) étages, joints entre eux par une cloison étanche, chacun desdits étages délimitant une enceinte étanche (7a, 7b) comprenant au moins un milieu capillaire (9a, 9b) de circulation d'un fluide diphasique en phase liquide et un canal vapeur (8a, 8b) de circulation du fluide diphasique en phase vapeur, chacune des structures diphasiques comprenant au moins une extrémité d'assemblage (3, 4) pour l'assemblage de ladite structure diphasique avec l'autre structure diphasique, les enceintes étanches (7a, 7b) de chaque structure diphasique étant ouvertes à l'extrémité d'assemblage, les premier et second étages présentant chacun une extrémité de raccordement (50, 60 ; 51, 61) à l'extrémité d'assemblage, le premier étage de chacune des structures diphasiques présentant, à son extrémité d'assemblage, un tronçon saillant (52, 53) qui s'étend en saillie du second étage,
et **en ce que** le procédé d'assemblage comprend les étapes suivantes :
- on positionne l'extrémité de raccordement (50) du premier étage de la première structure diphasique contre ou à proximité immédiate de l'extrémité de raccordement (51) du premier étage de la seconde structure diphasique de sorte que leurs milieux capillaires (9a) se rejoignent et que leurs canaux vapeur (8a) se rejoignent, un espace subsistant alors entre les extrémités de raccordement (60, 61) des seconds étages des structures diphasiques,
- on soude entre elles, de façon étanche et sur toute leur périphérie, les enceintes étanches (7a) des premiers étages des structures diphasiques,
- on se munit d'un pont (10) présentant une enceinte étanche (7c) comprenant un milieu capillaire (9c) de circulation du fluide diphasique en phase liquide, un canal vapeur (8c) de circulation du fluide diphasique en phase vapeur et deux extrémités de raccordement (100, 101) ouvertes, le pont étant configuré pour venir se loger dans l'espace entre les extrémités de raccordement (60, 61) des seconds étages des structures diphasiques et pour que ses extrémités de raccordement (100, 101) se retrouvent alors en contact avec ou à proximité immédiate des extrémités de raccordement des seconds étages,
- on insère ledit pont entre les extrémités de raccordement (60, 61) des seconds étages des première et seconde structures diphasiques, les extrémités de raccordement (100, 101) du pont étant alors en contact ou à proximité immédiate des extrémités de raccordement desdits seconds étages de sorte que le milieu capillaire du pont (9c) et le milieu capillaire (9b) du second étage de chacune des deux structures diphasiques se rejoignent et que le canal vapeur du pont (8c) et le canal vapeur (8b) du second étage de chacune des structures diphasiques se rejoignent, le milieu capillaire du pont (9c) et le canal vapeur du pont (8c) réalisant une jonction entre, respectivement, les milieux capillaires (9b) et les canaux vapeur (8b) des seconds étages pour former, respectivement, un second chemin liquide continu et un second chemin vapeur continu,
- on soude de façon étanche les enceintes (7c, 7b, 7a) du pont et des structures diphasiques, selon un contour fermé.

7. Procédé d'assemblage selon la revendication 6, dans lequel l'extrémité de raccordement (50) du premier étage de la première structure diphasique (1) présente un épaulement périphérique formant une fiche mâle (56), tandis que l'extrémité de raccordement (51) du premier étage de la seconde structure diphasique (2) présente un évidement et un épaulement périphérique (57) formant une fiche femelle (58) configurée pour recevoir par emboîtement la fiche mâle (56) du premier étage de la première structure diphasique.

8. Procédé d'assemblage selon la revendication 7, dans lequel l'évidement de la fiche femelle (58) présente une dimension longitudinale inférieure à ladite fiche mâle (56), de sorte qu'une gorge périphérique apparait lorsque lesdites fiches mâle et femelle sont emboîtées, laquelle gorge périphérique permet de loger des premières lignes externes de soudure (20) disposées sur des faces extérieures des premiers étages (5) des première et seconde structures diphasiques (1, 2) ainsi qu'une première ligne interne de soudure (21) disposée sur des faces supérieures intérieures (54, 55) desdits premiers étages.

9. Procédé d'assemblage selon l'une des revendications 6 à 8, dans lequel les première et seconde structures diphasiques (1, 2) sont obtenues par fabrication additive.

10. Procédé de fabrication d'un dispositif de contrôle thermique redondant ayant une longueur supérieure ou égale à 400mm, destiné à s'étendre entre une source chaude et une source froide et comprenant au moins deux étages redondants contenant chacun un fluide diphasique, **caractérisé en ce qu'**il comprend :
- la production par fabrication additive d'au moins une première structure diphasique (1), une seconde structure diphasique (2) et un pont (10), où chacune desdites première et seconde structures diphasiques comprend un premier étage (5) et un second étage (6) joints entre eux par une cloison étanche, chacun desdits étages délimitant une enceinte étanche (7a, 7b) comprenant au moins un milieu capillaire (9a, 9b) de circulation du fluide diphasique en phase liquide et un canal vapeur (8a, 8b) de circulation du fluide diphasique en phase vapeur, chacune des structures diphasiques comprenant au moins une extrémité d'assemblage (3, 4) pour l'assemblage de ladite structure diphasique avec l'autre structure diphasique, les enceintes étanches (7a, 7b) de chaque structure diphasique étant ouvertes à l'extrémité d'assemblage, les premier et second étages présentant chacun une extrémité de raccordement (50, 60 ; 51, 61) à l'extrémité d'assemblage, le premier étage de chacune des structures diphasiques présentant, à son extrémité d'assemblage, un tronçon saillant (52, 53) qui s'étend en saillie du second étage de sorte que, lorsque l'extrémité de raccordement (50) du premier étage de la première structure diphasique (1) est placée contre ou à proximité immédiate de l'extrémité de raccordement (51) du premier étage de la seconde structure diphasique (2), que leurs milieux capillaires (9a) se rejoignent pour former un premier chemin liquide et que leurs canaux vapeur (8a) se rejoignent pour former un premier chemin vapeur, un espace subsiste entre les extrémités de raccordement (60, 61) des seconds étages des structures diphasiques, et où le pont présente une enceinte étanche (7c) comprenant un milieu capillaire (9c) de circulation du fluide diphasique en phase liquide, un canal vapeur (8c) de circulation du fluide diphasique en phase vapeur et deux extrémités de raccordement (100, 101) ouvertes, le pont étant configuré pour venir se loger dans l'espace entre les extrémités de raccordement (60, 61) des seconds étages des structures diphasiques et pour que ses extrémités de raccordement (100, 101) se retrouvent alors en contact avec les extrémités de raccordement des seconds étages le milieu capillaire (9c) du pont et le canal vapeur (8c) du pont étant configurés pour réaliser une jonction entre, respectivement, les milieux capillaires (9b) et les canaux vapeur (8b) des seconds étages pour former, respectivement, un second chemin liquide continu et un second chemin vapeur continu, puis
- un assemblage desdites structures diphasiques conformément au procédé d'assemblage selon l'une des revendications 6 à 9.

## Patentansprüche

1. Redundante Wärmesteuerungsvorrichtung (1, 2, 10), umfassend eine erste zweiphasige Struktur (1) und eine zweite zweiphasige Struktur (2), **dadurch gekennzeichnet, dass**:
- jede der zweiphasigen Strukturen zwei verschiedene Stufen, bezeichnet als erste (5) und zweite (6) Stufe, umfasst, die durch eine dichte Trennwand miteinander verbunden sind, wobei jede der Stufen ein dichtes Gehäuse (7a, 7b) begrenzt, das wenigstens ein Kapillarmedium (9a, 9b) für die Zirkulation eines zweiphasigen Fluids in der Flüssigphase und einen Dampfkanal (8a, 8b) für die Zirkulation des zweiphasigen Fluids in der Dampfphase umfasst, wobei jede der zweiphasigen Strukturen wenigstens ein Verbindungsende (3, 4) für die Verbindung der zweiphasigen Struktur mit der anderen zweiphasigen Struktur umfasst, wobei die dichten Gehäuse (7a, 7b) jeder zweiphasigen Struktur am Verbindungsende offen sind, wobei die erste und zweite Stufe jeweils ein Anschlussende (50, 60; 51, 61) am Verbindungsende aufweisen,
- die erste Stufe jeder der zweiphasigen Strukturen an ihrem Verbindungsende einen vorstehenden Abschnitt (52, 53) aufweist, der sich über die zweite Stufe hervorstehend erstreckt, wobei das Anschlussende (50) der ersten Stufe der ersten zweiphasigen Struktur an dem Anschlussende (51) der ersten Stufe der zweiten zweiphasigen Struktur anliegt oder sich in unmittelbarer Nähe davon befindet, so dass sich einerseits ihr Kapillarmedium zu einem ersten kontinuierlichen Flüssigkeitspfad zusammenschließen und sich andererseits ihre Dampfkanäle (8a) zu einem ersten kontinuierlichen Dampfpfad zusammenschließen, während ihre dichten Gehäuse (7a) über ihren gesamten Umfang dicht miteinander verschweißt sind, wobei dann ein Raum zwischen den Anschlussenden (60, 61) der zweiten Stufen der zweiphasigen Strukturen verbleibt,
- die Vorrichtung ferner eine Brücke (10) umfasst, die so eingerichtet ist, dass sie in den Raum zwischen den Anschlussenden (60, 61) der zweiten Stufen der zweiphasigen Strukturen aufgenommen wird, wobei die Brücke ein dichtes Gehäuse (7c) aufweist, das ein Kapillarmedium (9c) für die Zirkulation des zweiphasigen Fluids in der Flüssigphase, einen Dampfkanal (8c) für die Zirkulation des zweiphasigen Fluids in der Dampfphase und zwei offene Anschlussenden (100, 101) umfasst, die an den Anschlussenden (60, 61) der zweiten Stufen der ersten und zweiten zweiphasigen Struktur anliegen oder sich in der Nähe davon befinden, so dass sich das Kapillarmedium der Brücke (9c) und das Kapillarmedium der zweiten Stufe (9b) jeder der zweiphasigen Strukturen (1, 2) zusammenschließen und sich der Dampfkanal der Brücke (8c) und der Dampfkanal der zweiten Stufe (8b) jeder der zweiphasigen Strukturen (1, 2) zusammenschließen, wobei das Kapillarmedium der Brücke (9c) und der Dampfkanal der Brücke (8c) eine Verbindung zwischen jeweils den Kapillarmedien (9b) und den Dampfkanälen (8b) der zweiten Stufen herstellen, um jeweils einen zweiten durchgehenden Flüssigkeitspfad und einen zweiten durchgehenden Dampfpfad zu bilden, während die dichten Gehäuse (7c, 7b, 7a) der Brücke und der zweiphasigen Strukturen über einen gesamten geschlossenen Umfang dicht miteinander verschweißt sind.

2. Vorrichtung nach Anspruch 1, wobei die Gehäuse (7a, 7c, 7b) der Brücke (10) und der zweiphasigen Strukturen (1, 2) so verschweißt sind, dass wenigstens eine erste äußere Schweißlinie (20) gebildet wird, die an Außenseiten der ersten Stufen der zweiphasigen Strukturen angeordnet ist, zweite äußere Schweißlinien (22), die an Außenseiten der zweiten Stufen und der Brücke angeordnet sind, und dritte äußere Schweißlinien (23), die an Außenseiten der ersten Stufen und der Brücke angeordnet sind, wobei die erste, zweite und dritte äußere Schweißlinie miteinander verbunden sind und somit eine geschlossene und dichte Schweißnaht bilden.

3. Vorrichtung nach dem vorhergehenden Anspruch, wobei die Anschlussenden (50, 51) der gegenüberliegenden ersten Stufen wenigstens eine umlaufende Nut zur Aufnahme der ersten äußeren Schweißlinien (20) bilden.

4. Vorrichtung nach einem der vorhergehenden Ansprüche, wobei die Brücke Kerben (105) zur Aufnahme einer ersten inneren Schweißlinie (21) aufweist, die auf inneren Oberseiten (54, 55) der ersten Stufen der ersten und zweiten zweiphasigen Struktur angeordnet ist, wobei diese Kerben gegenüber der Verbindung der Anschlussenden (50, 51) der ersten Stufen verlaufen.

5. Vorrichtung nach einem der vorhergehenden Ansprüche, wobei die erste und zweite zweiphasige Struktur (1, 2) vom Typ komplexe Struktur sind, die durch additive Fertigung erzeugt wird.

6. Verfahren zur Verbindung einer ersten zweiphasigen Struktur (1) und einer zweiten zweiphasigen Struktur (2), **dadurch gekennzeichnet, dass** jede der zweiphasigen Strukturen zwei verschiedene Stufen, bezeichnet als erste (5) und zweite (6) Stufe, umfasst, die durch eine dichte Trennwand miteinander verbunden sind, wobei jede der Stufen ein dichtes Gehäuse (7a, 7b) begrenzt, das wenigstens ein Kapillarmedium (9a, 9b) für die Zirkulation eines zweiphasigen Fluids in der Flüssigphase und einen Dampfkanal (8a, 8b) für die Zirkulation des zweiphasigen Fluids in der Dampfphase umfasst, wobei jede der zweiphasigen Strukturen wenigstens ein Verbindungsende (3, 4) für die Verbindung der zweiphasigen Struktur mit der anderen zweiphasigen Struktur umfasst, wobei die dichten Gehäuse (7a, 7b) jeder zweiphasigen Struktur am Verbindungsende offen sind, wobei die erste und zweite Stufe jeweils ein Anschlussende (50, 60; 51, 61) am Verbindungsende aufweisen, wobei die erste Stufe jeder der zweiphasigen Strukturen an ihrem Verbindungsende einen vorstehenden Abschnitt (52, 53) aufweist, der sich über die zweite Stufe hervorstehend erstreckt,
und dass das Verbindungsverfahren die folgenden Schritte umfasst:
- Positionieren des Anschlussendes (50) der ersten Stufe der ersten zweiphasigen Struktur anliegend an dem Anschlussende (51) der ersten Stufe der zweiten zweiphasigen Struktur oder in unmittelbarer Nähe davon, so dass sich ihre Kapillarmedien (9a) zusammenschließen und sich ihre Dampfkanäle (8a) zusammenschließen, wobei dann ein Raum zwischen den Anschlussenden (60, 61) der zweiten Stufen der zweiphasigen Strukturen verbleibt,
- dichtes Verschweißen der dichten Gehäuse (7a) der ersten Stufen der zweiphasigen Strukturen über ihren gesamten Umfang,
- Bereitstellen einer Brücke (10) mit einem dichten Gehäuse (7c), das ein Kapillarmedium (9c) für die Zirkulation des zweiphasigen Fluids in der Flüssigphase, einen Dampfkanal (8c) für die Zirkulation des zweiphasigen Fluids in der Dampfphase und zwei offene Anschlussenden (100, 101) umfasst, wobei die Brücke so eingerichtet ist, dass sie in den Raum zwischen den Anschlussenden (60, 61) der zweiten Stufen der zweiphasigen Strukturen aufgenommen wird und dass ihre Anschlussenden (100, 101) dann mit den Anschlussenden der zweiten Stufen in Kontakt kommen oder sich in unmittelbarer Nähe von diesen befinden,
- Einsetzen der Brücke zwischen die Anschlussenden (60, 61) der zweiten Stufen der ersten und zweiten zweiphasigen Struktur, wobei die Anschlussenden (100, 101) der Brücke dann mit den Anschlussenden der zweiten Stufen in Kontakt kommen oder sich in unmittelbarer Nähe von diesen befinden, so dass sich das Kapillarmedium der Brücke (9c) und das Kapillarmedium (9b) der zweiten Stufe jeder der beiden zweiphasigen Strukturen zusammenschließen und sich der Dampfkanal der Brücke (8c) und der Dampfkanal (8b) der zweiten Stufe jeder der zweiphasigen Strukturen zusammenschließen, wobei das Kapillarmedium der Brücke (9c) und der Dampfkanal der Brücke (8c) eine Verbindung zwischen jeweils den Kapillarmedien (9b) und den Dampfkanälen (8b) der zweiten Stufen herstellen, um jeweils einen zweiten kontinuierlichen Flüssigkeitspfad und einen zweiten kontinuierlichen Dampfpfad zu bilden,
- dichtes Verschweißen der Gehäuse (7c, 7b, 7a) der Brücke und der zweiphasigen Strukturen gemäß einem geschlossenen Umfang.

7. Verbindungsverfahren nach Anspruch 6, wobei das Anschlussende (50) der ersten Stufe der ersten zweiphasigen Struktur (1) eine umlaufende Schulter aufweist, die einen Stecker (56) bildet, während das Anschlussende (51) der ersten Stufe der zweiten zweiphasigen Struktur (2) eine Aussparung und eine umlaufende Schulter (57) aufweist, die eine Buchse (58) bildet, die so eingerichtet ist, dass sie den Stecker (56) der ersten Stufe der ersten zweiphasigen Struktur aufnimmt.

8. Verbindungsverfahren nach Anspruch 7, wobei die Aussparung des Steckers (58) ein Längsmaß aufweist, das kleiner ist als der Stecker (56), so dass eine umlaufende Nut entsteht, wenn die Stecker und die Buchse zusammengesteckt sind, wobei es die umlaufende Nut ermöglicht, erste äußere Schweißlinien (20) aufzunehmen, die an Außenseiten der ersten Stufen (5) der ersten und zweiten zweiphasigen Strukturen (1, 2) angeordnet sind, sowie eine erste innere Schweißlinie (21), die an inneren Oberseiten (54, 55) der ersten Stufen angeordnet ist.

9. Verbindungsverfahren nach einem der Ansprüche 6 bis 8, wobei die erste und zweite zweiphasige Struktur (1, 2) durch additive Fertigung hergestellt werden.

10. Verfahren zur Herstellung einer redundanten Wärmesteuerungsvorrichtung mit einer Länge von 400 mm oder mehr, die sich zwischen einer warmen und einer kalten Quelle erstrecken soll und wenigstens zwei redundante Stufen umfasst, die jeweils ein zweiphasiges Fluid enthalten, **dadurch gekennzeichnet, dass** es umfasst:
- die additive Herstellung von wenigstens einer ersten zweiphasigen Struktur (1), einer zweiten zweiphasigen Struktur (2) und einer Brücke (10), wobei jede der ersten und zweiten zweiphasigen Struktur eine erste Stufe (5) und eine zweite Stufe (6) umfasst, die durch eine dichte Trennwand miteinander verbunden sind, wobei jede der Stufen einen dichten Raum (7a, 7b) begrenzt, der wenigstens ein Kapillarmedium (9a, 9b) für die Zirkulation des zweiphasigen Fluids in der Flüssigphase und einen Dampfkanal (8a, 8b) für die Zirkulation des zweiphasigen Fluids in der Dampfphase umfasst, wobei jede der zweiphasigen Strukturen wenigstens ein Verbindungsende (3, 4) für die Verbindung der zweiphasigen Struktur mit der anderen zweiphasigen Struktur umfasst, wobei die dichten Gehäuse (7a, 7b) jeder zweiphasigen Struktur am Verbindungsende offen sind, wobei die erste und zweite Stufe jeweils ein Anschlussende (50, 60; 51, 61) am Verbindungsende aufweisen; wobei die erste Stufe jeder der zweiphasigen Strukturen an ihrem Verbindungsende einen vorstehenden Abschnitt (52, 53) aufweist, der sich über die zweite Stufe hervorstehend erstreckt, so dass, wenn das Anschlussende (50) der ersten Stufe der ersten zweiphasigen Struktur (1) anliegend an dem Anschlussende (51) der ersten Stufe der zweiten zweiphasigen Struktur (2) oder in unmittelbarer Nähe davon platziert ist, sich ihre Kapillarmedien (9a) zusammenschließen, um einen ersten Flüssigkeitspfad zu bilden, und sich ihre Dampfkanäle (8a) zusammenschließen, um einen ersten Dampfpfad zu bilden, wobei ein Raum zwischen den Anschlussenden (60, 61) der zweiten Stufen der zweiphasigen Strukturen verbleibt, und wobei die Brücke ein dichtes Gehäuse (7c) aufweist, das ein Kapillarmedium (9c) für die Zirkulation des zweiphasigen Fluids in der Flüssigphase, einen Dampfkanal (8c) für die Zirkulation des zweiphasigen Fluids in der Dampfphase und zwei offene Anschlussenden (100, 101) umfasst, wobei die Brücke so eingerichtet ist, dass sie in den Raum zwischen den Anschlussenden (60, 61) der zweiten Stufen der zweiphasigen Strukturen aufgenommen wird und dass ihre Anschlussenden (100, 101) dann mit den Anschlussenden der zweiten Stufen in Kontakt kommen oder sich in unmittelbarer Nähe von diesen befinden, wobei das Kapillarmedium (9c) der Brücke und der Dampfkanal (8c) der Brücke so eingerichtet sind, dass sie eine Verbindung jeweils zwischen den Kapillarmedien (9b) und den Dampfkanälen (8b) der zweite Stufen herstellen, um jeweils einen zweiten durchgehenden Flüssigkeitspfad und einen zweiten durchgehenden Dampfpfad zu bilden, und dann
- eine Verbindung der zweiphasigen Strukturen gemäß dem Verbindungsverfahren nach einem der Ansprüche 6 bis 9.

## Claims

1. A redundant thermal control device (1, 2, 10) comprising a first two-phase structure (1) and a second two-phase structure (2), **characterized in that**:
- each of the two-phase structures comprises two distinct stages, referred to as the first (5) and second (6) stages, joined together by a tight partition, each of the stages delimiting a tight enclosure (7a, 7b) comprising at least one capillary medium (9a, 9b) for circulation of a two-phase fluid in liquid phase and a vapor channel (8a, 8b) for circulation of the two-phase fluid in vapor phase, each of the two-phase structures comprising at least one assembly end (3, 4) for assembling said two-phase structure with the other two-phase structure, the tight enclosures (7a, 7b) of each two-phase structure being open at the assembly end, the first and second stages each having a connecting end (50, 60; 51, 61) at the assembly end,
- the first stage of each of the two-phase structures has, at its assembly end, a protruding segment (52, 53) that extends protruding from the second stage, the connecting end (50) of the first stage of the first two-phase structure coming against or in immediate proximity to the connecting end (51) of the first stage of the second two-phase structure so that, on the one hand, their capillary media meet to form a first continuous liquid path and, on the other hand, their vapor channels (8a) meet to form a first continuous vapor path, while their tight enclosures (7a) are tightly welded together over their entire periphery, a space then remaining between the connecting ends (60, 61) of the second stages of the two-phase structures,
- the device further comprises a bridge (10), configured to be accommodated in the space between the connecting ends (60, 61) of the second stages of the two-phase structures, said bridge having a tight enclosure (7c) comprising a capillary medium (9c) for circulation of the two-phase fluid in liquid phase, a vapor channel (8c) for circulation of the two-phase fluid in vapor phase and two open connecting ends (100, 101) that come against or in immediate proximity to the connecting ends (60, 61) of the second stages of the first and second two-phase structures such that the capillary medium of the bridge (9c) and the capillary medium of the second stage (9b) of each of the two-phase structures (1, 2) meet and that the vapor channel of the bridge (8c) and the vapor channel of the second stage (8b) of each of the two-phase structures (1, 2) meet, the capillary medium of the bridge (9c) and the vapor channel of the bridge (8c)) making junction between, respectively, the capillary media (9b) and the vapor channels (8b) of the second stages to form, respectively, a second continuous liquid path and a second continuous vapor path, while the tight enclosures (7c, 7b, 7a) of the bridge and the two-phase structures are tightly welded together over an entire closed contour.

2. The device according to claim 1, wherein the enclosures (7a, 7c, 7b) of the bridge (10) and the two-phase structures (1, 2) are welded so as to form at least one first outer weld line (20) disposed on external faces of the first stages of the two-phase structures, second outer weld lines (22) disposed on external faces of the second stages and the bridge, and third outer weld lines (23) disposed on external faces of the first stages and the bridge, the first, second and third outer weld lines joined together thus forming a closed and tight weld bead.

3. The device according to the preceding claim, wherein the connecting ends (50, 51) of the first stages facing each other form at least one peripheral groove for accommodating the first outer weld lines (20).

4. The device according to one of the preceding claims, wherein the bridge has notches (105) for accommodating a first inner weld line (21) arranged on inner upper faces (54, 55) of the first stages of the first and second two-phase structures, these notches facing the junction of the connecting ends (50, 51) of said first stages.

5. The device according to one of the preceding claims, wherein the first and second two-phase structures (1, 2) are of the complex structure type generated by additive manufacturing.

6. A method for assembling a first two-phase structure (1) and a second two-phase structure (2), **characterized in that** each of the two-phase structures comprises two distinct stages, referred to as the first (5) and second (6) stages, joined together by a tight partition, each of said stages delimiting a tight enclosure (7a, 7b) comprising at least one capillary medium (9a, 9b) for circulation of a two-phase fluid in liquid phase and a vapor channel (8a, 8b) for circulation of the two-phase fluid in vapor phase, each of the two-phase structures comprising at least one assembly end (3, 4) for assembling said two-phase structure with the other two-phase structure, the tight enclosures (7a, 7b) of each two-phase structure being open at the assembly end, the first and second stages each having a connecting end (50, 60; 51, 61) at the assembly end, the first stage of each of the two-phase structures having, at its assembly end, a protruding segment (52, 53) that extends protruding from the second stage,
and **in that** the assembly method comprises the following steps:
- positioning the connecting end (50) of the first stage of the first two-phase structure against or in immediate proximity to the connecting end (51) of the first stage of the second two-phase structure so that their capillary media (9a) meet and their vapor channels (8a) meet, a space then remaining between the connecting ends (60, 61) of the second stages of the two-phase structures,
- tightly welding the tight enclosures (7a) of the first stages of the two-phase structures together, over their entire periphery,
- providing a bridge (10) having a tight enclosure (7c) comprising a capillary medium (9c) for circulation of the two-phase fluid in liquid phase, a vapor channel (8c) for circulation of the two-phase fluid in vapor phase and two open connecting ends (100, 101), the bridge being configured to be accommodated in the space between the connecting ends (60, 61) of the second stages of the two-phase structures and so that its connecting ends (100, 101) then come into contact with or in the immediate vicinity of the connecting ends of the second stages,
- inserting said bridge between the connecting ends (60, 61) of the second stages of the first and second two-phase structures, the connecting ends (100, 101) of the bridge being then in contact with or in immediate proximity to the connecting ends of said second stages so that the capillary medium of the bridge (9c) and the capillary medium (9b) of the second stage of each of the two two-phase structures meet and that the vapor channel of the bridge (8c) and the vapor channel (8b) of the second stage of each of the two-phase structures meet, the capillary medium of the bridge (9c) and the vapor channel of the bridge (8c) making junction between, respectively, the capillary media (9b) and the vapor channels (8b) of the second stages to form, respectively, a second continuous liquid path and a second continuous vapor path,
- tightly welding the enclosures (7c, 7b, 7a) of the bridge and the two-phase structures following a closed contour.

7. The assembly method according to claim 6, wherein the connecting end (50) of the first stage of the first two-phase structure (1) has a peripheral shoulder forming a male plug (56), while the connecting end (51) of the first stage of the second two-phase structure (2) has a recess and a peripheral shoulder (57) forming a female plug (58) configured to receive the male plug (56) of the first stage of the first two-phase structure in an interlocking manner.

8. The assembly method according to claim 7, wherein the recess of the female plug (58) has a longitudinal dimension lower than said male plug (56), such that a peripheral groove appears when said male and female plugs are interlocked, which peripheral groove makes it possible to accommodate first outer weld lines (20) disposed on external faces of the first stages (5) of the first and second two-phase structures (1, 2) as well as a first inner weld line (21) disposed on internal upper faces (54, 55) of said first stages.

9. The assembly method according to one of claims 6 to 8, wherein the first and second two-phase structures (1, 2) are obtained by additive manufacturing.

10. A method for manufacturing a redundant thermal control device having a length greater than or equal to 400 mm, intended to extend between a hot source and a cold source and comprising at least two redundant stages, each containing a two-phase fluid, **characterized in that** it comprises:
- producing by additive manufacturing at least a first two-phase structure (1), a second two-phase structure (2) and a bridge (10), wherein each of said first and second two-phase structures comprises a first stage (5) and a second stage (6) joined together by a tight partition, each of said stages delimiting a tight enclosure (7a, 7b) comprising at least one capillary medium (9a, 9b) for circulation of the two-phase fluid in liquid phase and a vapor channel (8a, 8b) for circulation of the two-phase fluid in vapor phase, each of the two-phase structures comprising at least one assembly end (3, 4) for assembling said two-phase structure with the other two-phase structure, the tight enclosures (7a, 7b) of each two-phase structure being open at the assembly end, the first and second stages each having a connecting end (50, 60; 51, 61) at the assembly end, the first stage of each of the two-phase structures having, at its assembly end, a protruding segment (52, 53) that extends protruding from the second stage such that, when the connecting end (50) of the first stage of the first two-phase structure (1) is placed against or in immediate proximity to the connecting end (51) of the first stage of the second two-phase structure (2), their capillary media (9a) meet to form a first liquid path and their vapor channels (8a) meet to form a first vapor path, a space remains between the connecting ends (60, 61) of the second stages of the two-phase structures,
and wherein the bridge has a tight enclosure (7c) comprising a capillary medium (9c) for circulation of the two-phase fluid in liquid phase, a vapor channel (8c) for circulation of the two-phase fluid in vapor phase and two open connecting ends (100, 101), the bridge being configured to be accommodated in the space between the connecting ends (60, 61) of the second stages of the two-phase structures and so that its connecting ends (100, 101) then come into contact with the connecting ends of the second stages, the capillary medium (9c) of the bridge and the vapor channel (8c) of the bridge being configured to make a junction between, respectively, the capillary media (9b) and the vapor channels (8b) of the second stages to form, respectively, a second continuous liquid path and a second continuous vapor path, and then
- assembling said two-phase structures in accordance with the assembly method according to one of claims 6 to 9.
